# EUROPEAN PATENT APPLICATION

(11) **EP 4 541 853 A1**
(43) Date of publication of application: **23.04.2025**
(21) Application number: 22964560.1
(22) Date of filing: 22.11.2022
(51) Int. Cl.: C08L 67/03, C08L 101/00, C08L 25/06, C08L 25/08, C08L 33/00, D01F 6/62, D01F 8/14, D01D 5/34

(54) **BIODEGRADABLE RESIN COMPOSITION, BIODEGRADABLE NONWOVEN FABRIC, AND METHOD FOR PRODUCING SAME**

(30) Priority: 31.10.2022 KR 20220143098
(71) Applicant: CJ CheilJedang Corporation, Seoul 04560 (KR)
(72) Inventor: SONG, Bo-Seok, Seoul 04560 (KR); AHN, Jee Soo, Seoul 04560 (KR); HAN, Tae Hwan, Seoul 04560 (KR); SIM, Eun Jung, Seoul 04560 (KR); JUNG, Minho, Seoul 04560 (KR); YOON, Ki Chull, Seoul 04560 (KR)
(74) Representative: Meissner Bolte Partnerschaft mbB
(86) International application number: PCT/KR2022/018487
(87) International publication number: WO 2024/096181

(57) **Abstract**

The present invention relates to a biodegradable resin composition, a biodegradable nonwoven fabric, and a method for producing same. Specifically, according to one embodiment of the present invention, the biodegradable resin composition comprises: a polyhydroxyalkanoate (PHA) resin containing a 4-hydroxybutyrate (4-HB) repeating unit; and a plasticizer, wherein the biodegradable resin composition has excellent biodegradability and biocompatibility by satisfying a melt flow index (MFI) of 5g/10min or more measured at 190°C and 2.16 kg according to ASTM D1238, and thus is environmentally friendly and has excellent processability and productivity. Therefore, high-quality spunbond nonwoven fabric or short-fiber nonwoven fabric can be manufactured and characteristics such as viscosity suitable for a process can be easily controlled, making it possible to improve productivity and processability.

## Description

### Technical Field

The present invention relates to a biodegradable resin composition, to a biodegradable nonwoven fabric, and to a process for preparing the same.

### Background Art

In recent years, as concerns about environmental problems increase, research on the treatment and recycling of various household wastes is being actively conducted. Specifically, although polymer materials, which are inexpensive and have excellent processability, are widely used to manufacture various products such as paper, films, fibers, packaging materials, bottles, and containers, when the lifespan of these products is over, harmful substances may be discharged when they are incinerated, and it takes hundreds of years depending on their types to completely decompose naturally.

Therefore, research on biodegradable polymers continues, which can be decomposed within a short period of time to enhance environmental friendliness, while enhancing mechanical properties such as flexibility and strength, productivity, and processability, and increasing the lifespan of products themselves, thereby reducing the amount of waste or enhancing their recyclability.

Polyhydroxyalkanoates (PHA) are biodegradable polymers composed of several types of hydroxyl carboxylic acids produced by numerous microorganisms and used as intracellular storage materials. Polyhydroxyalkanoates have physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibit complete biodegradability, and are excellent in biocompatibility.

Meanwhile, nonwoven fabrics are an industrial fiber material used in various fields, for example, for controlling suspended matter such as fine particles or gases in the air or as a key material in the filtration process to control the purity of water used in industrial sites such as food processing. In particular, Since the 2,000s, interest in harmfulness to the human body due to yellow dust, fine dust, and ultrafine dust has increased, and interest in nonwoven fabrics used as filtering materials has increased due to the new coronavirus in 2019; thus, research thereon is being actively conducted.

Conventionally, petrochemical-based polymer materials have been used as materials for nonwoven fabrics. However, since it is difficult to collect or recycle petrochemical-based polymer materials after their use, they are left unattended in the soil or the ocean, thereby seriously polluting the environment. Although biodegradable polymers capable of enhancing biodegradability are being applied, their raw materials are expensive, or there is a limit to enhancing the filterability, air permeability, flexibility, and the like required for nonwoven fabrics.

In addition, nonwoven fabrics are mainly manufactured by the melt-blown process or the spun-bonding process. The spun-bonding process, as compared with the melt-blown process, has excellent processability in that it can produce fibers and nonwoven fabrics with various physical properties. In addition, since staple fiber nonwoven fabrics can be manufactured by applying a melt-blown process and/or a spun-bonding process in one stage or two stages, they can be used in various industrial fields in that desired physical properties can be more readily controlled. Accordingly, research is continued to develop a biodegradable resin composition that is environmentally friendly by virtue of its excellent biodegradability and biocompatibility, is capable of producing high-quality spun-bonded nonwoven fabrics or staple fiber nonwoven fabrics, and is excellent in productivity and processability since its properties such as viscosity suitable for the process can be readily controlled.

### [Prior Art Document]

### [Patent Document]

(Patent Document 1) Korean Laid-open Patent Publication No. 2012-0103158

### Disclosure of Invention

### Technical Problem

Accordingly, the present invention aims to provide a biodegradable resin composition that is environmentally friendly by virtue of its excellent biodegradability and biocompatibility, is capable of producing high-quality spun-bonded nonwoven fabrics or staple fiber nonwoven fabrics by virtue of its excellent productivity and processability, and is capable of readily controlling its properties such as viscosity suitable for the process.

### Solution to Problem

The biodegradable resin composition according to an embodiment of the present invention comprises a polyhydroxyalkanoate (PHA) resin comprising a 4-hydroxybutyrate (4-HB) repeat unit; and a fluidizing agent, wherein the melt flow index (MFI) measured at 190°C and 2.16 kg according to ASTM D1238 is 5 g/10 minutes or more.

According to an embodiment of the present invention, the fluidizing agent may comprise at least one selected from the group consisting of polystyrene-based, polyacrylate-based, and polystyrene-acrylate-based polymers.

According to an embodiment of the present invention, the fluidizing agent may have a specific gravity of 0.7 to 1.8 and a weight average molecular weight of 1,500 g/mole to 8,000 g/mole.

According to an embodiment of the present invention, the fluidizing agent may have a glass transition temperature (Tg) of 40°C or higher as measured by differential scanning calorimetry (DSC) and a melt flow index of 1,800 g/10 minutes or more when measured at 130°C and 12 kg according to ASTM D1238.

According to an embodiment of the present invention, the biodegradable resin composition may comprise the fluidizing agent in an amount of 0.1 phr to 20 phr.

According to an embodiment of the present invention, the PHA resin may comprise the 4-hydroxybutyrate (4-HB) repeat unit in an amount of 0.1% by weight to 60% by weight.

According to an embodiment of the present invention, the PHA resin may comprise a first PHA resin.

According to an embodiment of the present invention, the first PHA resin may comprise a 4-hydroxybutyrate (4-HB) repeat unit in an amount of 15% by weight to 60% by weight and have a melt flow index (MFI) of 0.1 g/10 minutes to 20 g/10 minutes when measured at 165°C and 5 kg according to ASTM D1238.

According to an embodiment of the present invention, the PHA resin may comprise a second PHA resin.

According to an embodiment of the present invention, the second PHA resin may comprise a 4-hydroxybutyrate (4-HB) repeat unit in an amount of 0.1% by weight to 30% by weight and have a melt flow index of 0.1 g/10 minutes to 15 g/10 minutes when measured at 165°C and 5 kg according to ASTM D1238.

According to an embodiment of the present invention, the biodegradable resin composition may comprise at least one biodegradable resin selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), and thermoplastic starch (TPS).

According to an embodiment of the present invention, the weight ratio of the PHA resin to the biodegradable resin may be 1:99 to 99:1.

According to an embodiment of the present invention, the weight ratio of the PHA resin to the polylactic acid resin may be 20:80 to 70:30.

According to an embodiment of the present invention, the biodegradable resin composition may further comprise at least one additive selected from the group consisting of pigments, dye absorbers, light absorbers, antioxidants, compatibilizers, weighting agents, nucleating agents, melt strength agents, and slip agents.

According to an embodiment of the present invention, the PHA resin may further comprise at least one repeat unit selected from the group consisting of 3-hydroxybutyrate (3-HB), 3-hydroxypropionate (3-HP), 3-hydroxyhexanoate (3-HH), 3-hydroxyvalerate (3-HV), 4-hydroxyvalerate (4-HV), 5-hydroxyvalerate (5-HV), and 6-hydroxyhexanoate (6-HH).

According to an embodiment of the present invention, the biodegradable resin composition may have a glass transition temperature (Tg) of -35°C to 15°C, a melting temperature (Tm) of 105°C to 200°C, a crystallization temperature (Tc), which is not measured or 50°C to 120°C, and a cold crystallization temperature (Tcc) of 30°C to 125°C, as measured by a differential scanning calorimeter (DSC).

The biodegradable nonwoven fabric according to still another embodiment of the present invention comprises biodegradable fibers, wherein the biodegradable fibers comprise a polyhydroxyalkanoate (PHA) resin comprising a 4-hydroxybutyrate (4-HB) repeat unit; and a fluidizing agent.

According to still another embodiment of the present invention, the biodegradable fibers may have an average length of 100 mm or less and an average diameter of 1 µm to 100 µm.

According to still another embodiment of the present invention, it may be prepared by a spun-bonding process.

According to still another embodiment of the present invention, it may be prepared from a biodegradable resin composition, and the biodegradable resin composition may have a melt flow index (MFI) of 5 g/10 minutes or more when measured at 190°C and 2.16 kg according to ASTM D1238.

According to still another embodiment of the present invention, the biodegradable fiber may be a composite fiber of a heterogeneous cross-section or a composite fiber of two or more or three or more components.

According to still another embodiment of the present invention, the biodegradable fiber may be a sheath-core type comprising a core part and a sheath part, a side-by-side type, a sea-islands type, or a segmented-pie type.

The process for preparing a biodegradable nonwoven fabric according to still another embodiment of the present invention comprises melt-spinning a biodegradable resin composition or pellets prepared by melt-extruding it, wherein the biodegradable resin composition comprises a polyhydroxyalkanoate (PHA) resin comprising a 4-hydroxybutyrate (4-HB) repeat unit and a fluidizing agent and has a melt flow index (MFI) of 5 g/10 minutes or more when measured at 190°C and 2.16 kg according to ASTM D1238.

According to still another embodiment of the present invention, the step of spinning a biodegradable resin composition may be carried out using a sheath-core composite spinning apparatus.

According to still another embodiment of the present invention, the sheath-core composite spinning apparatus comprises a core part and a sheath part, and the weight ratio of raw materials to be fed to the core part and the sheath part may be 5:95 to 95:5.

According to still another embodiment of the present invention, the biodegradable resin composition may be fed to the core part.

### Advantageous Effects of Invention

The biodegradable resin composition according to an embodiment of the present invention comprises a polyhydroxyalkanoate (PHA) resin comprising a 4-hydroxybutyrate (4-HB) repeat unit; and a fluidizing agent, wherein the melt flow index (MFI) measured at 190°C and 2.16 kg according to ASTM D1238 is 5 g/10 minutes or more. Thus, it is environmentally friendly by virtue of its excellent biodegradability and biocompatibility, is capable of producing high-quality spun-bonded nonwoven fabrics or staple fiber nonwoven fabrics by virtue of its excellent productivity and processability, and is capable of readily controlling its properties such as viscosity suitable for the process, leading to enhanced productivity and processability.

Specifically, when a spun-bonded nonwoven fabric or a staple fiber nonwoven fabric is prepared from the biodegradable resin composition, the biodegradable resin composition has excellent viscosity characteristics; thus, it is capable of easily preparing a nonwoven fabric under conditions of lower pressures and temperatures than those of the prior art, leading to excellent productivity and processability, and to enhance the quality of the nonwoven fabric produced.

Further, not only can a biodegradable nonwoven fabric be prepared directly from the biodegradable resin composition, but also a biodegradable nonwoven fabric can be prepared using biodegradable pellets obtained from the biodegradable resin composition, which provides convenient options for selecting a process as needed.

In addition, since the biodegradable resin composition and the biodegradable nonwoven fabric prepared therefrom are biodegradable in both soil and sea, along with excellent thermal and mechanical properties, they can be advantageously applied to more diverse fields to exhibit excellent characteristics.

### Best Mode for Carrying out the Invention

Hereinafter, the present invention will be described in detail. The present invention is not limited to the disclosures given below, but it may be modified into various forms as long as the gist of the invention is not changed.

Throughout the present specification, when a part is referred to as "comprising" an element, it is understood that other elements may be comprised, rather than other elements are excluded, unless specifically stated otherwise.

All numbers and expressions related to the quantities of components, reaction conditions, and the like used herein are to be understood as being modified by the term "about" unless otherwise indicated.

Throughout the present specification, the terms first, second, and the like are used to describe various components. But the components should not be limited by the terms. The terms are used only for the purpose of distinguishing one component from another.

### Biodegradable resin composition

The biodegradable resin composition according to an embodiment of the present invention comprises a polyhydroxyalkanoate (PHA) resin comprising a 4-hydroxybutyrate (4-HB) repeat unit; and a fluidizing agent, wherein the melt flow index (MFI) measured at 190°C and 2.16 kg according to ASTM D1238 is 5 g/10 minutes or more.

Nonwoven fabrics are a fiber aggregate or film bonded to each other using physical or chemical means, not by spinning, weaving, or knitting. It is directly manufactured in the form of a fabric by using the fusing force of the fibers themselves or the entanglement of the fibers. Conventionally, nonwoven fabrics are manufactured using petrochemical-based materials such as polypropylene (PP), but their biodegradability is low. Therefore, a method of using polylactic acid (PLA) as a material for nonwoven fabrics has been proposed. However, the degree of improvement in biodegradability is not large. Due to its low flexibility, it is rough and stiff to the touch, making it difficult to be applied to various fields due to poor usability or wearing comfort.

The biodegradable resin composition according to an embodiment of the present invention comprises a polyhydroxyalkanoate (PHA) resin comprising a 4-hydroxybutyrate (4-HB) repeat unit; and a fluidizing agent, wherein the melt flow index (MFI) measured at 190°C and 2.16 kg according to ASTM D1238 is controlled to 5 g/10 minutes or more. Thus, it is environmentally friendly by virtue of its excellent biodegradability and biocompatibility, is capable of producing high-quality spun-bonded nonwoven fabrics or staple fiber nonwoven fabrics by virtue of its excellent productivity and processability, and is capable of readily controlling its properties such as viscosity suitable for the process, leading to enhanced productivity and processability.

In particular, when a nonwoven fabric is prepared from the biodegradable resin composition, the biodegradable resin composition has excellent viscosity characteristics; thus, it is capable of easily preparing a nonwoven fabric under the conditions of lower pressures and temperatures than the prior art, leading to excellent productivity and processability, and to enhance the quality of the nonwoven fabric produced.

Specifically, the biodegradable resin composition may be a composition for a biodegradable nonwoven fabric.

The biodegradable resin composition according to an embodiment of the present invention comprises a polyhydroxyalkanoate (PHA) resin comprising a 4-hydroxybutyrate (4-HB) repeat unit.

Specifically, the biodegradable resin composition according to an embodiment of the present invention comprises a polyhydroxyalkanoate (PHA) resin, which is a copolymerized polyhydroxyalkanoate resin comprising a 4-hydroxybutyrate (4-HB) repeat unit, more specifically, a specific first PHA resin and/or a specific second PHA resin having a 4-HB repeat unit, whereby it is environmentally friendly by virtue of excellent biodegradability and biocompatibility, and it is possible to readily prepare a biodegradable nonwoven fabric having excellent characteristics.

In addition, since the biodegradable resin composition and the biodegradable nonwoven fabric prepared therefrom are biodegradable in both soil and sea, along with excellent thermal and mechanical properties, they can be advantageously applied to more diverse fields to exhibit excellent characteristics.

PHA is a natural thermoplastic polyester polymer that accumulates in microbial cells. Since it is a biodegradable material, it can be composted and finally decomposed into carbon dioxide, water, and organic waste without generating toxic waste. In particular, since PHA is biodegradable even in soil and sea, when the biodegradable resin composition and the biodegradable fiber or biodegradable nonwoven fabric prepared using the same comprise a PHA resin, it may have environmentally friendly characteristics. Thus, the biodegradable resin composition and the biodegradable nonwoven fabric prepared using the same have a great advantage in that it can be used in various fields since it is biodegradable and environmentally friendly.

Specifically, PHA is a natural thermoplastic polyester polymer that accumulates in microbial cells. It is formed by accumulating PHA in cells to store carbon and energy when certain bacteria are supplied with nutrients (nitrogen source, phosphorus, and the like) disproportionately.

In addition, PHA has physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibit complete biodegradability, and are excellent in biocompatibility.

In particular, unlike other environmentally friendly plastic materials such as PBS, PLA, and PTT, PHA can be synthesized from more than 150 types of monomers, so that hundreds of types of PHAs can be prepared depending on the types of monomers. Hundreds of different types of PHAs depending on the types of monomers have completely different structures and properties.

A PHA resin may be composed of a single monomer repeat unit in living cells and may be formed by polymerizing one or more monomer repeat units. Specifically, the PHA resin may be a homo-polyhydroxyalkanoate resin (hereinafter, referred to as HOMO PHA resin) or a copolymerized polyhydroxyalkanoate resin (hereinafter, referred to as a copolymerized PHA resin), that is, a copolymer in which different repeat units are randomly distributed in the polymer chain.

Examples of repeat units that may be contained in the PHA resin include 2-hydroxybutyrate, lactic acid, glycolic acid, 3-hydroxybutyrate (hereinafter, referred to as 3-HB), 3-hydroxypropionate (hereinafter, referred to as 3-HP), 3-hydroxyvalerate (hereinafter, referred to as 3-HV), 3-hydroxyhexanoate (hereinafter, referred to as 3-HH), 3-hydroxyheptanoate (hereinafter, referred to as 3-HHep), 3-hydroxyoctanoate (hereinafter, referred to as 3-HO), 3-hydroxynonanoate (hereinafter, referred to as 3-HN), 3-hydroxydecanoate (hereinafter, referred to as 3-HD), 3-hydroxydodecanoate (hereinafter, referred to as 3-HDd), 4-hydroxybutyrate (hereinafter, referred to as 4-HB), 4-hydroxyvalerate (hereinafter, referred to as 4-HV), 5-hydroxyvalerate (hereinafter, referred to as 5-HV), and 6-hydroxyhexanoate (hereinafter, referred to as 6-HH). The PHA resin may contain one or more repeat units selected from the above.

Specifically, the PHA resin may comprise one or more repeat units selected from the group consisting of 3-HB, 4-HB, 3-HP, 3-HH, 3-HV, 4-HV, 5-HV, and 6-HH.

That is, the PHA resin may be a HOMO PHA resin composed of a 4-HB repeat unit alone or a copolymerized PHA resin comprising a 4-HB repeat unit.

In addition, the PHA resin may be a copolymerized PHA resin that comprises a 4-HB repeat unit and further comprises one repeat unit different from the 4-HB repeat unit, or two, three, four, five, six, or more repeat units different from each other. For example, the PHA resin may be poly-3-hydroxybutyrate-co-4-hydroxybutyrate (hereinafter, referred to as 3HB-co-4HB).

In addition, the PHA resin may comprise isomers. For example, the PHA resin may comprise structural isomers, enantiomers, or geometric isomers. Specifically, the PHA resin may comprise structural isomers.

In addition, the PHA resin may be a copolymerized PHA resin with controlled crystallinity. For example, the PHA resin may comprise at least one or more of a 4-HB repeat unit, and the content of the 4-HB repeat unit may be controlled to adjust the crystallinity of the PHA resin.

For example, the PHA resin may be a copolymerized PHA resin that comprises at least one repeat unit selected from the group consisting of 3-hydroxybutyrate (3-HB), 4-hydroxybutyrate (4-HB), 3-hydroxypropionate (3-HP), 3-hydroxyhexanoate (3-HH), 3-hydroxyvalerate (3-HV), 4-hydroxyvalerate (4-HV), 5-hydroxyvalerate (5-HV), and 6-hydroxyhexanoate (6-HH).

Specifically, the copolymerized PHA resin may comprise a 4-HB repeat unit and further comprises one or more repeat units selected from the group consisting of a 3-HB repeat unit, a 3-HP repeat unit, a 3-HH repeat unit, a 3-HV repeat unit, a 4-HV repeat unit, a 5-HV repeat unit, and a 6-HH repeat unit. More specifically, the PHA resin may comprise a 4-HB repeat unit and a 3-HB repeat unit.

More specifically, the PHA resin may comprise a 4-HB repeat unit in an amount of 0.1% by weight to 60% by weight. For example, the PHA resin may be a copolymerized PHA resin comprising a 4-HB repeat unit and a 3-HB repeat unit and may comprise the 4-HB repeat unit in an amount of 0.1% by weight to 60% by weight.

The PHA resin may comprise the 4-HB repeat unit in an amount of 0.5% by weight to 50% by weight, 1% by weight to 48% by weight, 3% by weight to 46% by weight, 5% by weight to 45% by weight, 8% by weight to 40% by weight, 10% by weight to 38% by weight, 15% by weight to 35% by weight, 20% by weight to 30% by weight, 0.5% by weight to 25% by weight, 1% by weight to 20% by weight, 2% by weight to 15% by weight, 3% by weight to 10% by weight, 20% by weight to 60% by weight, 25% by weight to 55% by weight, or 35% by weight to 50% by weight.

In addition, the PHA resin may be a copolymerized PHA resin comprising a 4-HB repeat unit and a 3-HB repeat unit and may comprise the 3-HB repeat unit in an amount of 20% by weight or more. For example, the PHA resin may comprise the 3-HB repeat unit in an amount of 35% by weight or more, 40% by weight or more, 50% by weight or more, 60% by weight or more, 70% by weight or more, or 75% by weight or more, and 99% by weight or less, 98% by weight or less, 97% by weight or less, 96% by weight or less, 95% by weight or less, 93% by weight or less, 91% by weight or less, 90% by weight or less, 80% by weight or less, 70% by weight or less, 60% by weight or less, or 55% by weight or less.

The PHA resin whose crystallinity is adjusted may be one in which its crystallinity and amorphousness are adjusted as the irregularities are increased in its molecular structure. Specifically, the types or ratios of the monomers or the types or contents of the isomers may be adjusted.

According to an embodiment of the present invention, the PHA resin may comprise two or more types of PHA resins having different crystallinities. Specifically, the PHA resin may be prepared by mixing two or more types of PHA resins having different crystallinities to have the content of a 4-HB repeat unit in the specific range.

Specifically, the PHA resin may comprise a first PHA, which is an amorphous PHA resin with controlled crystallinity.

As an amorphous PHA resin (hereinafter, referred to as aPHA resin) with controlled crystallinity, the first PHA resin may comprise a 4-HB repeat unit in an amount of 15% by weight to 60% by weight, 15% by weight to 55% by weight, 20% by weight to 55% by weight, 25% by weight to 55% by weight, 30% by weight to 55% by weight, 35% by weight to 55% by weight, 20% by weight to 50% by weight, 25% by weight to 50% by weight, 30% by weight to 50% by weight, 35% by weight to 50% by weight, or 20% by weight to 40% by weight.

The glass transition temperature (Tg) of the first PHA resin may be -45°C to -10°C, -35°C to -15°C, -35°C to -20°C, or -30°C to -20°C. In addition, the crystallization temperature (Tc) of the first PHA resin may not be measured or may be 60°C to 120°C, 60°C to 110°C, 70°C to 120°C, or 75°C to 115°C. The melting temperature (Tm) of the first PHA resin may not be measured or may be 100°C to 170°C, 100°C to 160°C, 110°C to 160°C, or 120°C to 150°C. The cold crystallization temperature (Tcc) of the first PHA resin may not be measured or may be 30°C to 125°C, 30°C to 120°C, 40°C to 110°C, or 50°C to 100°C.

In the present specification, the glass transition temperature (Tg), crystallization temperature (Tc), melting temperature (Tm), and cold crystallization temperature (Tcc) may be measured using a differential scanning calorimeter (DSC). Specifically, the glass transition temperature (Tg), crystallization temperature (Tc), melting temperature (Tm), and cold crystallization temperature (Tcc) may be measured by conducting a first scan or a second scan in a differential scanning calorimetry (DSC) mode, and they can be confirmed from a heat flow curve obtained by these scans. More specifically, the glass transition temperature (Tg), crystallization temperature (Tc), melting temperature (Tm), and cold crystallization temperature (Tcc) may be confirmed from a heat flow curve obtained by raising the temperature from 40°C to 180°C at a rate of 10°C/minute and then cooling it to -50°C at a rate of 10°C/minute.

The first PHA resin may have a melt flow index (MFI) of 0.1 g/10 minutes to 20 g/10 minutes measured at 165°C and 5 kg according to ASTM D1238. For example, the melt flow index (MFI) of the first PHA resin measured at 165°C and 5 kg according to ASTM D1238 may be 0.1 g/10 minutes to 15 g/10 minutes, 0.1 g/10 minutes to 12 g/10 minutes, 0.1 g/10 minutes to 10 g/10 minutes, 0.1 g/10 minutes to 8 g/10 minutes, 0.1 g/10 minutes to 6 g/10 minutes, 0.1 g/10 minutes to 5.5 g/10 minutes, 0.5 g/10 minutes to 10 g/10 minutes, 1 g/10 minutes to 10 g/10 minutes, 2 g/10 minutes to 8 g/10 minutes, 3 g/10 minutes to 6 g/10 minutes, or 3 g/10 minutes to 5.5 g/10 minutes.

The first PHA resin may have a weight average molecular weight of 10,000 g/mole to 1,200,000 g/mole, 10,000 g/mole to 1,000,000 g/mole, 50,000 g/mole to 1,000,000 g/mole, 200,000 g/mole to 1,200,000 g/mole, 250,000 g/mole to 1,000,000 g/mole, 100,000 g/mole to 900,000 g/mole, 500,000 g/mole to 900,000 g/mole, 200,000 g/mole to 800,000 g/mole, or 200,000 g/mole to 500,000 g/mole.

In addition, the PHA resin may comprise a second PHA resin that is a semi-crystalline PHA resin.

As a semi-crystalline PHA resin (hereinafter, referred to as scPHA resin) with controlled crystallinity, the second PHA resin may comprise a 4-HB repeat unit in an amount of 0.1% by weight to 30% by weight. For example, the second PHA resin may comprise the 4-HB repeat unit in an amount of 0.1% by weight to 30% by weight, 0.5% by weight to 30% by weight, 1% by weight to 29% by weight, 3% by weight to 29% by weight, 1% by weight to 28% by weight, 1.5% by weight to 25% by weight, 2% by weight to 20% by weight, 2.5% by weight to 15% by weight, 3% by weight to 25% by weight, 5% by weight to 21% by weight, 6% by weight to 18% by weight, 10% by weight to 30% by weight, 10% by weight to 20% by weight, 13% by weight to 23% by weight, or 15% by weight to 20% by weight.

The glass transition temperature (Tg) of the second PHA resin may be -30°C to 80°C, -30°C to 10°C, -25°C to 5°C, -25°C to 0°C, -20°C to 0°C, or -15°C to 0°C. The crystallization temperature (Tc) of the second PHA resin may be 70°C to 120°C, 75°C to 120°C, or 75°C to 115°C. The melting temperature (Tm) of the second PHA resin may be 105°C to 165°C, 110°C to 160°C, 115°C to 155°C, or 120°C to 150°C. The cold crystallization temperature (Tcc) of the second PHA resin may not be measured or may be 35°C to 125°C, 35°C to 120°C, 45°C to 110°C, or 55°C to 100°C.

In addition, the second PHA resin may have a melt flow index of 0.1 g/10 minutes to 15 g/10 minutes measured at 165°C and 5 kg according to ASTM D1238. For example, the melt flow index (MFI) of the second PHA resin measured at 165°C and 5 kg according to ASTM D1238 may be 0.1 g/10 minutes to 10 g/10 minutes, 0.2 g/10 minutes to 7 g/10 minutes, 0.5 g/10 minutes to 5.5 g/10 minutes, 0.6 g/10 minutes to 5 g/10 minutes, 0.8 g/10 minutes to 5 g/10 minutes, 1 g/10 minutes to 5 g/10 minutes, 0.1 g/10 minutes to 5 g/10 minutes, 1 g/10 minutes to 6.5 g/10 minutes, 1.5 g/10 minutes to 15 g/10 minutes, 3 g/10 minutes to 10 g/10 minutes, 3.5 g/10 minutes to 12 g/10 minutes, or 4.5 g/10 minutes to 10 g/10 minutes.

The second PHA resin may have a weight average molecular weight of 10,000 g/mole to 1,200,000 g/mole, 50,000 g/mole to 1,100,000 g/mole, 50,000 g/mole to 350,000 g/mole, 100,000 g/mole to 1,000,000 g/mole, 100,000 g/mole to 900,000 g/mole, 200,000 g/mole to 800,000 g/mole, 200,000 g/mole to 600,000 g/mole, 200,000 g/mole to 500,000 g/mole, or 500,000 g/mole to 1,200,000 g/mole.

The first PHA resin and the second PHA resin may be distinguished in terms of the content of a 4-HB repeat unit and may have at least one characteristic selected from the group consisting of glass transition temperature (Tg), crystallization temperature (Tc), melting temperature (Tm), cold crystallization temperature (Tcc), and melt flow index. Specifically, the first PHA and the second PHA may be distinguished in terms of the content of a 4-HB repeat unit, glass transition temperature (Tg), crystallization temperature (Tg), melting temperature (Tm), cold crystallization temperature (Tcc), melt flow index, and the like. For example, the content of a 4-HB repeat unit of the first PHA resin and the content of a 4-HB repeat unit of the second PHA may be different from each other.

According to an embodiment of the present invention, the PHA resin may comprise the first PHA resin or the second PHA resin, or it may comprise both the first PHA resin and the second PHA resin.

Specifically, as the PHA resin comprises the first PHA resin, which is an amorphous PHA resin, or both the first PHA resin, which is an amorphous PHA resin, and the second PHA resin, which is a semi-crystalline PHA resin, more specifically, as the contents of the first PHA resin and the second PHA resin are adjusted, it is possible to more effectively control the desired physical properties.

According to an embodiment of the present invention, the PHA resin may comprise the first PHA resin or the second PHA resin. Specifically, the PHA resin may be composed of only the first PHA resin or only the second PHA resin.

According to another embodiment of the present invention, the PHA resin may comprise the first PHA resin and the second PHA resin. In such an event, the weight ratio of the first PHA resin to the second PHA resin may be 1:0.5 to 5. For example, the weight ratio of the first PHA resin to the second PHA resin may be 1:0.5 to 4.5, 1:0.6 to 4.2, or 1:0.7 to 3.5. As the weight ratio of the first PHA resin to the second PHA resin satisfies the above range, it is possible to more effectively control the desired physical properties.

In addition, the glass transition temperature (Tg) of the PHA resin may be -45°C to 80°C, -35°C to 80°C, -30°C to 80°C, -25°C to 75°C, -20°C to 70°C, -35°C to 5°C, -25°C to 5°C, -35°C to 0°C, -25°C to 0°C, -30°C to -10°C, -35°C to -15°C, -35°C to -20°C, -20°C to 0°C, -15°C to 0°C, or -15°C to -5°C.

In addition, the crystallization temperature (Tc) of the PHA resin may not be measured or may be 60°C to 120°C, 60°C to 110°C, 70°C to 120°C, 75°C to 120°C, 75°C to 115°C, 75°C to 110°C, or 90°C to 110°C.

The melting temperature (Tm) of the PHA resin may not be measured or may be 100°C to 170°C, 105°C to 170°C, 105°C to 165°C, 110°C to 160°C, 115°C to 155°C, 110°C to 150°C, 120°C to 150°C, or 120°C to 140°C.

The cold crystallization temperature (Tcc) of the PHA resin may not be measured or may be 30°C to 125°C, 40°C to 115°C, or 50°C to 105°C.

The PHA resin may have a decomposition temperature (Td, weight loss of 5%) of 220°C to 280°C, 245°C to 275°C, 255°C to 270°C, or 260°C to 270°C, as measured by a thermogravimetric analyzer (TGA).

In the present specification, the decomposition temperature (Td) may be measured using a thermogravimetric analyzer (TGA). Specifically, the decomposition temperature (Td) may be confirmed as a temperature at which the weight of the PHA resin is reduced by 5% from a weight change curve obtained by raising the temperature from room temperature to 600°C at a rate of 10°C/minute using a thermogravimetric analyzer (TGA).

In addition, the PHA resin may have a weight average molecular weight of 10,000 g/mole to 1,200,000 g/mole. For example, the weight average molecular weight of the PHA resin may be 50,000 g/mole to 1,200,000 g/mole, 100,000 g/mole to 1,000,000 g/mole, 200,000 g/mole to 1,200,000 g/mole, 250,000 g/mole to 1,150,000 g/mole, 300,000 g/mole to 1,100,000 g/mole, 350,000 g/mole to 950,000 g/mole, 100,000 g/mole to 900,000 g/mole, 200,000 g/mole to 800,000 g/mole, 250,000 g/mole to 650,000 g/mole, 200,000 g/mole to 400,000 g/mole, 300,000 g/mole to 600,000 g/mole, 500,000 g/mole to 1,200,000 g/mole, 500,000 g/mole to 1,000,000 g/mole 550,000 g/mole to 1,050,000 g/mole, 550,000 g/mole to 900,000 g/mole, 600,000 g/mole to 900,000 g/mole, or 500,000 g/mole to 900,000 g/mole.

The PHA resin may have a crystallinity of 90% or less as measured by a differential scanning calorimeter (DSC). For example, the crystallinity of the PHA resin may be measured by differential scanning calorimetry and may be 90% or less, 85% or less, 80% or less, 75% or less, or 70% or less.

In addition, the PHA resin may have an average particle size of 0.5 µm to 5 µm. For example, the average particle size of the PHA resin may be 0.7 µm to 4.6 µm, 1.1 µm to 4.5 µm, 1.5 µm to 4.3 µm, 2.2 µm to 4.2 µm, 2.6 µm to 4.0 µm, 2.8 µm to 3.9 µm, or 3.1 µm to 3.8 µm.

The average particle size of the PHA resin may be measured with a nano particle size analyzer (e.g., Zetasizer Nano ZS). Specifically, the PHA is subjected to measurement of average particle size through dynamic light scattering (DLS) at a temperature of 25°C and a measurement angle of 175° using Zetasizer Nano ZS (manufacturer: Marven). In such an event, the value of the peak derived through the polydispersity index (PDI) in the confidence interval of 0.5 is taken as the particle size.

The PHA resin may have a polydispersity index (PDI) of less than 2.5. For example, the polydispersity index of the PHA resin may be 2.4 or less, 2.3 or less, 2.1 or less, or 2.0 or less.

In addition, the PHA resin may be obtained by cell disruption using a non-mechanical method or a chemical method. Specifically, since the PHA resin is a natural thermoplastic polyester polymer that accumulates in microbial cells and has a relatively large average particle size, it may be obtained through a disruption process in order to more effectively control the yield or physical properties of the desired material and enhance the process efficiency.

The biodegradable resin composition may comprise the PHA resin in an amount of 15% by weight or more based on the total weight of the biodegradable resin composition. For example, the content of the PHA resin may be 20% by weight or more, 30% by weight or more, 35% by weight or more, 40% by weight or more, 50% by weight or more, 65% by weight or more, 70% by weight or more, 85% by weight or more, or 90% by weight or more, based on the total weight of the biodegradable resin composition.

The biodegradable resin composition according to an embodiment of the present invention comprises a fluidizing agent.

Specifically, the fluidizing agent may comprise at least one selected from the group consisting of polystyrene-based, polyacrylate-based, and polystyrene-acrylate-based polymers. If the fluidizing agent comprises polystyrene-based, it is preferable in that the viscosity characteristics can be more efficiently controlled and that the torque or pressure of the extruder during processing can be reduced, thereby enhancing the productivity and processability, but it is not limited thereto.

In addition, the fluidizing agent may have a specific gravity of 0.7 to 1.8. For example, the specific gravity of the fluidizing agent may be 0.75 to 1.5, 0.8 to 1.35, or 0.95 to 1.2.

The fluidizing agent may have a weight average molecular weight of 1,500 g/mole to 8,000 g/mole. For example, the weight average molecular weight of the fluidizing agent may be 1,600 g/mole to 7,000 g/mole, 1,700 g/mole to 5,000 g/mole, 1,900 g/mole to 3,500 g/mole, or 2,100 g/mole to 3,200 g/mole.

In addition, the fluidizing agent may have a glass transition temperature (Tg) of 40°C or higher as measured by differential scanning calorimetry. For example, the glass transition temperature (Tg) of the fluidizing agent may be 42°C or higher, 45°C or higher, 50°C or higher, 53°C or higher, 55°C or higher, or 58°C or higher, as measured by differential scanning calorimetry (DSC).

The fluidizing agent may have a melt flow index of 1,800 g/10 minutes or more when measured at 130°C and 12 kg according to ASTM D1238. For example, the melt flow index of the fluidizing agent measured at 130°C and 12 kg according to ASTM D1238 may be 2,100 g/10 minutes or more, 2,400 g/10 minutes or more, 2,600 g/10 minutes or more 2,800 g/10 minutes or more, 3,000 g/10 minutes or more, 3,500 g/10 minutes or more, or 4,500 g/10 minutes or more.

The biodegradable resin composition may comprise the fluidizing agent in an amount of 0.1 phr to 20 phr. For example, the content of the fluidizing agent may be 0.2 phr to 15 phr, 0.3 phr to 10 phr, 0.5 phr to 8 phr, 0.8 phr to 6 phr, 0.9 phr to 4 phr, 0.95 phr to 3 phr, 0.1 phr to 10 phr, 0.1 phr to 5 phr, or 0.1 phr to 2.5 phr. As the content of the fluidizing agent satisfies the above range, it may be more advantageous for achieving the desired effects of the present invention.

Meanwhile, according to still another embodiment of the present invention, the biodegradable resin composition may comprise at least one biodegradable resin selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), and thermoplastic starch (TPS).

As the biodegradable resin is employed together with the PHA resin, the biodegradable resin composition can further enhance the dispersibility, processability, and productivity.

The biodegradable resin composition may comprise the biodegradable resin in an amount of less than 90% by weight based on the total weight of the biodegradable resin composition. For example, the content of the biodegradable resin may be 85% by weight or less, 80% by weight or less, 70% by weight or less, 60% by weight or less, 45% by weight or less, or 35% by weight or less, based on the total weight of the biodegradable resin composition. Specifically, the content of the biodegradable resin may be 35% by weight to 80% by weight, 45% by weight to 75% by weight, or 50% by weight to 70% by weight, but it is not limited thereto.

According to still another embodiment of the present invention, the weight ratio of the PHA resin to the biodegradable resin may be 1:99 to 99:1. For example, the weight ratio of the PHA resin to the biodegradable resin may be 5:95 to 99:5, 10:90 to 90: 10, 15:90 to 60:40, 5:95 to 45:55, 10:90 to 40:60, 15:85 to 35:65, or 20:80 to 30:70. As the weight ratio of the PHA resin and the biodegradable resin satisfies the above range, productivity and processability can be enhanced without deterioration in biodegradability.

Specifically, the biodegradable resin may be a polylactic acid (PLA) resin.

More specifically, the weight ratio of the PHA resin and the PLA resin may be 10:90 to 70:30. For example, the weight ratio of the PHA resin and the PLA resin may be 10:90 to 65:35, 15:85 to 55:45, 15:85 to 50:50, or 20:80 to 30:70. As the weight ratio of the PHA resin and the PLA resin satisfies the above range, productivity and processability can be further enhanced without deterioration in biodegradability.

Meanwhile, according to still another embodiment of the present invention, the biodegradable resin composition may comprise at least one additive selected from the group consisting of pigments, dye absorbers, light absorbers, antioxidants, compatibilizers, weighting agents, nucleating agents, melt strength agents, and slip agents.

The pigment may comprise at least one selected from the group consisting of inorganic particles, carbon black, and cobalt green. The inorganic particles may be a metal such as Cu, a metal oxide, a metalloid oxide, or a combination thereof, but it is not limited thereto.

The content of the pigment may be 0.01 phr to 20 phr, 0.01 phr to 15 phr, 0.01 phr to 12 phr, 0.01 phr to 10 phr, 0.01 phr to 8 phr, 0.01 phr to 5 phr, 0.2 phr to 4.5 phr, 0.2 phr to 4 phr, or 0.5 phr to 3 phr.

The antioxidant is an additive for preventing decomposition by ozone or oxygen, preventing oxidation during storage, or preventing deterioration of physical properties. Common antioxidants may be used as long as the effects of the present invention are not impaired.

Specifically, the antioxidant may comprise at least one selected from the group consisting of hindered phenol-based antioxidants and phosphite-based (phosphorus-based) antioxidants.

The hindered phenol-based antioxidant may comprise, for example, at least one selected from the group consisting of 4,4'-methylene-bis(2,6-di-t-butylphenol), octadecyl-3-(3,5-di-t-butyl-4-hydroxyphenyl)propionate, pentaerythritol tetrakis[3-(3,5-di-t-butyl-4-hydroxyphenyl)propionate), and 3,9-bis[2-[3-(3-tert-butyl-4-hydroxy-5-methylphenyl)propionyloxy]-1,1-dimethylethyl]-2,4,8,10-tetraoxaspiro[5.5]undecane.

The phosphite-based (phosphorus-based) antioxidant may comprise, for example, at least one selected from the group consisting of tris-(2,4-di-t-butylphenyl)phosphite, bis-(2,4-di-t-butylphenyl)pentaerythritol-diphosphite, bis-(2,6-di-t-butyl-4-methylphenyl)pentaerythritol-diphosphite, distearyl-pentaerythritol-diphosphite, [bis(2,4-di-t-butyl-5-methylphenoxy)phosphino]biphenyl, and N,N-bis[2-[[2,4,8,10-tetrakis(1,1-dimethylethyl)dibenzo[d,f][1,3,2]dioxyphosphepin-6-yl]oxy]-ethyl]ethanamine.

The content of the antioxidant may be 0.01 phr to 20 phr, 0.01 phr to 15 phr, 0.01 phr to 12 phr, 0.01 phr to 10 phr, 0.01 phr to 8 phr, 0.01 phr to 5 phr, 0.2 phr to 4.5 phr, 0.2 phr to 4 phr, or 0.5 phr to 3 phr. As the content of the antioxidant satisfies the above range, the physical properties may be enhanced, and it may be more advantageous for achieving the desired effects of the present invention.

The compatibilizer is an additive for imparting compatibility by removing the releasability of the biodegradable resin and/or the PHA resin. Common compatibilizers may be used as long as the effects of the present invention are not impaired.

Specifically, the compatibilizer may comprise at least one selected from the group consisting of polyvinyl acetates (PVAc), isocyanates, polypropylene carbonates, glycidyl methacrylates, ethylene vinyl alcohols, polyvinyl alcohols (PVA), ethylene vinyl acetates, maleic anhydrides, and glycerin stearate.

The content of the compatibilizer may be 0.01 phr to 20 phr, 0.01 phr to 15 phr, 0.01 phr to 12 phr, 0.01 phr to 10 phr, 0.01 phr to 8 phr, 0.01 phr to 5 phr, 0.2 phr to 4.5 phr, 0.2 phr to 4 phr, or 0.5 phr to 3 phr. As the content of the compatibilizer satisfies the above range, the physical properties may be enhanced by increasing the compatibility between the resins used, and it may be more advantageous for achieving the desired effects of the present invention.

The weighting agent is an inorganic material and an additive for increasing the moldability by increasing the crystallization rate during the molding process and for reducing the problem of cost increase due to the use of resins with higher biodegradability as compared with synthetic resins. Common inorganic materials may be used as long as the effects of the present invention are not impaired.

The weighting agent may comprise at least one selected from the group consisting of inorganic materials such as zinc and calcium, stearic acid, light or heavy calcium carbonate, silica, talc, kaolin, barium sulfate, clay, calcium oxide, magnesium hydroxide, titanium oxide, carbon black, and glass fibers.

The weighting agent may have an average particle size of 0.5 µm to 5 µm. For example, the average particle size of the weighting agent may be 0.5 µm to 4.8 µm, 0.5 µm to 4.5 µm, or 0.7 µm to 4 µm. If the average particle size of the weighting agent is less than 0.5 µm, it is difficult for the particles to be dispersed. If it exceeds 5 µm, the size of the particles becomes excessively large, which may impair the effects of the present invention.

The content of the weighting agent may be 0.01 phr to 20 phr, 0.01 phr to 15 phr, 0.01 phr to 12 phr, 0.01 phr to 10 phr, 0.01 phr to 8 phr, 0.01 phr to 5 phr, 0.2 phr to 4.5 phr, 0.2 phr to 4 phr, or 0.5 phr to 3 phr. As the content of the weighting agent satisfies the above range, it may be more advantageous for achieving the desired effects of the present invention.

The nucleating agent is an additive for supplementing or changing the crystallization morphology of a polymer and for enhancing the crystallization (solidification) rate when a melt of the polymer is cooled. In particular, since the PHA resin used in the present invention has a low crystallization rate, the process may not be readily carried out for a lack of crystallization during the process. If the nucleating agent is used to solve this problem, the crystallization rate can be increased to further enhance the processability, moldability, and productivity, and it is possible to effectively achieve the desired physical properties.

Common nucleating agents may be used as long as the effects of the present invention are not impaired. Specifically, the nucleating agent may comprise, for example, a metal compound comprising a single element substance (pure substance) or a composite oxide, a low molecular weight organic compound having a metal carboxylate group, a polymeric organic compound having a metal carboxylate group, a polymeric organic compound, phosphoric acid or phosphorous acid or a metal salt thereof, a sorbitol derivative, thioglycolic anhydride, and p-toluenesulfonic acid or a metal salt thereof, or the like. The nucleating agents may be used alone or in combination thereof.

The metal compound comprising a single element substance (pure substance) or a composite oxide may be at least one selected from the group consisting of, for example, carbon black, calcium carbonate, synthetic silicic acid and its salts, silica, zinc white, clay, kaolin, basic magnesium carbonate, mica, talc, quartz powder, diatomite, dolomite powder, titanium oxide, zinc oxide, antimony oxide, barium sulfate, calcium sulfate, alumina, calcium silicate, and metal salts of organic phosphorus, and boron nitride

The low molecular weight organic compound having a metal carboxylate group may be at least one selected from the group consisting of, for example, metal salts of octylic acid, toluic acid, heptanoic acid, pelargonic acid, lauric acid, myristic acid, palmitic acid, stearic acid, behenic acid, cerotic acid, montanic acid, melissic acid, benzene acid, p-tert-butylbenzene acid, terephthalic acid, terephthalic acid monomethyl ester, isophthalic acid, and isophthalic acid monomethyl ester.

The polymeric organic compound having a metal carboxylate group may be at least one selected from the group consisting of, for example, metal salts of carboxyl group-containing polyethylene obtained by an oxidation reaction of polyethylene, carboxyl group-containing polypropylene obtained by an oxidation reaction of polypropylene, a copolymer of acrylic acid or methacrylic acid with olefins (such as ethylene, propylene, and butene-1), a copolymer of acrylic acid or methacrylic acid with styrene, a copolymer of an olefin and maleic anhydride, and a copolymer of styrene and maleic anhydride.

The polymeric organic compound may be at least one selected from the group consisting of, for example, alpha-olefins branched to the carbon atom at position 3 and having 5 or more carbon atoms (such as 3,3-dimethylbutene-1,3-methylbutene-1,3-methylpentene-1,3-methylhexene-1 and 3,5,5-trimethylhexene-1), polymers of vinylcycloalkanes (such as vinylcyclopentane, vinylcyclohexane, and vinylnorbornane), polyalkylene glycols (such as polyethylene glycol and polypropylene glycol), poly(glycolic acid), cellulose, cellulose esters, and cellulose ethers.

The phosphoric acid or phosphorous acid or a metal salt thereof may be at least one selected from the group consisting of, for example, metal salts of diphenyl phosphate, diphenyl phosphite, bis(4-tert-butylphenyl)phosphate, and methylene bis-(2,4-tert-butylphenyl)phosphate. The sorbitol derivative may be, for example, bis(p-methylbenzylidene) sorbitol or bis(p-ethylbenzylidene) sorbitol.

The content of the nucleating agent may be 0.01 phr to 20 phr, 0.01 phr to 15 phr, 0.01 phr to 12 phr, 0.01 phr to 10 phr, 0.01 phr to 8 phr, 0.01 phr to 5 phr, 0.2 phr to 4.5 phr, 0.2 phr to 4 phr, or 0.5 phr to 3 phr. As the content of the nucleating agent satisfies the above range, the crystallization rate can be increased to enhance the processability, and it is possible to further enhance the productivity and moldability by enhancing the crystallization rate during, for example, the cutting step for producing pellets in the preparation process.

The melt strength agent is an additive for enhancing the melt strength of reactants. Common melt strength agents may be used as long as the effects of the present invention are not impaired.

Specifically, the melt strength agent may comprise at least one selected from the group consisting of polyesters, styrene-based polymers (such as acrylonitrile butadiene styrene and polystyrene), polysiloxanes, organomodified siloxane polymers, and maleic anhydride-grafted ethylene propylene diene monomer (MAH-g-EPDM).

The content of the melt strength agent may be 0.01 phr to 20 phr, 0.01 phr to 15 phr, 0.01 phr to 12 phr, 0.01 phr to 10 phr, 0.01 phr to 8 phr, 0.01 phr to 5 phr, 0.2 phr to 4.5 phr, 0.2 phr to 4 phr, or 0.5 phr to 3 phr. As the content of the melt strength agent satisfies the above range, it may be more advantageous for achieving the desired effects of the present invention.

The slip agent is an additive for enhancing the slip properties (slippery properties) during extrusion and for preventing fiber surfaces from sticking to each other. Specifically, common slip agents may be used as long as the effects of the present invention are not impaired. For example, the slip agent may be at least one selected from the group consisting of erucamide, oliamide, and stearamide.

The content of the slip agent may be 0.01 phr to 20 phr, 0.01 phr to 15 phr, 0.01 phr to 12 phr, 0.01 phr to 10 phr, 0.01 phr to 8 phr, 0.01 phr to 5 phr, 0.2 phr to 4.5 phr, 0.2 phr to 4 phr, or 0.5 phr to 3 phr. As the content of the slip agent satisfies the above range, the processability, productivity, and moldability may be further enhanced, and it may be more advantageous for achieving the desired effects of the present invention.

The biodegradable resin composition may comprise a crosslinking agent and/or a stabilizer as additional additives.

The crosslinking agent is an additive for modifying the properties of the PHA resin and increasing the molecular weight of the resin. Common crosslinking agents may be used as long as the effects of the present invention are not impaired.

For example, the crosslinking agent may be at least one selected from the group consisting of fatty acid esters, natural oil containing an epoxy group (epoxylated), diallyl phthalate, pentaerythritol tetraacrylate, trimethylolpropane triacrylate, pentaerythritol triacrylate, dipentaerythritol pentaacrylate, diethylene glycol dimethacrylate, and bis(2-methacryloxyethyl)phosphate.

The content of the crosslinking agent may be 0.01 phr to 20 phr, 0.01 phr to 15 phr, 0.01 phr to 12 phr, 0.01 phr to 10 phr, 0.01 phr to 8 phr, 0.01 phr to 5 phr, 0.2 phr to 4.5 phr, 0.2 phr to 4 phr, or 0.5 phr to 3 phr.

The stabilizer may be at least one selected from the group consisting of trimethyl phosphate, triphenyl phosphate, trimethyl phosphine, phosphoric acid, and phosphorous acid.

The content of the stabilizer may be 0.01 phr to 20 phr, 0.01 phr to 15 phr, 0.01 phr to 12 phr, 0.01 phr to 10 phr, 0.01 phr to 8 phr, 0.01 phr to 5 phr, 0.2 phr to 4.5 phr, 0.2 phr to 4 phr, or 0.5 phr to 3 phr.

In the present specification, the additives may be in the form of monomers, polymers, or copolymers, but they are not limited thereto.

According to still another embodiment of the present invention, the biodegradable resin composition may further comprise biomass.

As the biodegradable resin composition comprises biomass, it is possible to enhance biodegradability, as well as to improve the soil. That is, the biomass has excellent biodegradability, is readily disrupted when undecomposed, improves fertilizer, and increases soil strength, thereby producing a soil improvement effect.

The biomass may be employed in an amount of 5 to 50% by weight based on the total weight of the biodegradable resin composition. Specifically, the content of the biomass may be 10% by weight to 48% by weight, 15% by weight to 48% by weight, 20% by weight to 45% by weight, 20% by weight to 43% by weight, or 20% by weight to 40% by weight, based on the total weight of the biodegradable resin composition. As the content of the biomass satisfies the above range, the biodegradability is further enhanced, a soil improvement effect is produced, and the crosslinking strength with the PHA resin is improved, whereby it is possible to effectively achieve the desired effects of the present invention.

The biodegradable resin composition may have a melt flow index of 5 g/10 minutes or more when measured at 190°C and 2.16 kg according to ASTM D1238. For example, the melt flow index of the biodegradable resin composition may be 5 g/10 minutes or more, 6 g/10 minutes or more, 7 g/10 minutes or more 7.5 g/10 minutes or more, 8 g/10 minutes or more, 9 g/10 minutes or more, 5 g/10 minutes to 30 g/10 minutes, 6 g/10 minutes to 20 g/10 minutes, 7 g/10 minutes to 15 g/10 minutes, 7.5 g/10 minutes to 10 g/10 minutes, 7.5 g/10 minutes to 9.5 g/10 minutes, when measured at 190°C and 2.16 kg according to ASTM D1238.

In addition, the biodegradable resin composition may have a melt flow index of 30 g/10 minutes or more when measured at 210°C and 2.16 kg according to ASTM D1238. For example, the melt flow index of the biodegradable resin composition measured at 210°C and 2.16 kg according to ASTM D1238 may be 45 g/10 minutes or more, 50 g/10 minutes or more, 53 g/10 minutes or more, 55 g/10 minutes or more, 59 g/10 minutes or more, 65 g/10 minutes or more, 80 g/10 minutes or more, 90 g/10 minutes or more, or 100 g/10 minutes or more.

The melt flow index measured for the biodegradable resin composition according to ASTM D1238 may be measured for pellets prepared using the biodegradable resin composition according to ASTM D1238.

Specifically, the melt flow index may be measured according to ASTM D1238 for biodegradable pellets prepared by feeding the biodegradable resin composition into a twin-screw extruder, mixing, and melt-extruding it. More specifically, the biodegradable pellets may be prepared by setting the screw rotation speed of the twin-screw extruder to 200 rpm, mixing the biodegradable resin composition while raising the internal temperature from 50°C to 170°C, melt-extruding it at a pressure of 12 bar and a temperature of 177°C, and using an under-water cutter system.

The biodegradable resin composition may have a weight average molecular weight of 500,000 g/mole or less. For example, the weight average molecular weight of the biodegradable resin composition may be 450,000 g/mole or less, 400,000 g/mole or less, or 350,000 g/mole or less.

The biodegradable resin composition may have a glass transition temperature (Tg) of -35°C to 15°C, -25°C to 5°C, -20°C to 1°C, or -18°C to -5°C, a melting temperature (Tm) of 105°C to 200°C, 106°C to 195°C, 110°C to 180°C, or 113°C to 173°C, a crystallization temperature (Tc), which is not measured or 50°C to 120°C, 65°C to 100°C, or 75°C to 95°C, and a cold crystallization temperature (Tcc), which is not measured or 30°C to 120°C, 40°C to 110°C, or 50°C to 100°C, as measured by a differential scanning calorimeter (DSC).

In addition, the biodegradable resin composition may have a decomposition temperature (Td, weight loss of 5%) of 220°C or higher, 230°C or higher, 240°C or higher, 250°C or higher, or 260°C or higher, 220°C to 275°C, 235°C to 273°C, 240°C to 300°C, 245°C to 285°C, 255°C to 280°C, 260°C to 275°C, or 263°C to 270°C, as measured by a thermogravimetric analyzer (TGA).

### Biodegradable nonwoven fabric

The biodegradable nonwoven fabric according to still another embodiment of the present invention comprises biodegradable fibers, wherein the biodegradable fiber comprises a polyhydroxyalkanoate (PHA) resin comprising a 4-hydroxybutyrate (4-HB) repeat unit; and a fluidizing agent.

The biodegradable nonwoven fabric may be an aggregate of biodegradable fibers. Details on the PHA and fluidizing agent are as described above.

Specifically, the biodegradable fibers may have an average length of 100 mm or less. For example, the biodegradable fibers may be staple fibers and may have an average length of 85 mm or less, 70 mm or less, 60 mm or less, 55 mm or less, 45 mm or less, 35 mm or less, or 20 mm or less.

In addition, the biodegradable fibers may have an average diameter of 1 µm to 100 µm. For example, the average diameter of the biodegradable fibers may be 5 µm to 95 µm, 10 µm to 80 µm, 15 µm to 65 µm, or 20 µm to 50 µm.

The biodegradable fiber may have a fineness of 100 deniers or less. For example, the fineness of one filament of the biodegradable fibers constituting the biodegradable nonwoven fabric may be 0.1 denier to 100 deniers, 0.5 denier to 100 deniers, 1 denier to 100 deniers, 5 deniers to 95 deniers, 10 deniers to 90 deniers, 10 deniers to 80 deniers, 20 deniers to 70 deniers, or 30 deniers to 60 deniers.

The biodegradable fiber may have an elongation of 10% or more, 12% or more, 15% or more, 20% or more, 25% or more, 32% or more, 35% or more, 40% or more, 45% or more, 50% or more, or 60% or more, and 1,000% or less, 850% or less, 650% or less, 500% or less, 350% or less, 200% or less, 130% or less, 90% or less, 80% or less, or 75% or less.

The biodegradable fiber may have a weight average molecular weight of 300,000 g/mole or more or 500,000 g/mole or more, 10,000 g/mole to 5,000,000 g/mole, 20,000 g/mole to 4,000,000 g/mole, or 50,000 g/mole to 3,000,000 g/mole.

According to still another embodiment of the present invention, the biodegradable nonwoven fabric may be prepared by a spun-bonding process. Specifically, the biodegradable nonwoven fabric may be a spun-bonded nonwoven fabric.

According to still another embodiment of the present invention, the biodegradable nonwoven fabric may be prepared from a biodegradable resin composition, and the biodegradable resin composition may have a melt flow index (MFI) of 5 g/10 minutes or more when measured at 190°C and 2.16 kg according to ASTM D1238.

Details on the biodegradable resin composition are as described above.

According to another embodiment of the present invention, the biodegradable nonwoven fabric may be a biodegradable staple fiber nonwoven fabric prepared using the biodegradable resin composition.

According to still another embodiment of the present invention, the biodegradable fiber may be a composite fiber of a heterogeneous cross-section or a composite fiber of two or more or three or more components.

The heterogeneous cross-section fiber may have a cross-section of a circle, ellipse, or polygon, but it is not limited thereto.

In addition, the biodegradable fiber may be a sheath-core type comprising a core part and a sheath part, a side-by-side type, a sea-islands type, or a segmented-pie type.

In the sheath-core type, the cross-section of the core part and that of the sheath part may be different from each other. For example, the cross-section of the core part may be circular, and the cross-section of the sheath part may be in the shape of a donut, but they are not limited thereto.

In addition, the biodegradable fiber may be a two-component composite fiber in which the sheath part and the core part each comprise a different single-component resin. It may be a three-component composite fiber in which the sheath part comprises a single-component resin, and the core part comprises an at least two-component resin, or the core part comprises a single-component resin, and the sheath part comprises an at least two-component resin. In addition, the biodegradable fiber may be a composite fiber in which the sheath part and the core part each comprise an at least two-component resin.

For example, the core part may comprise the PHA resin, and the sheath part may comprise a biodegradable resin. For example, the biodegradable resin may be at least one selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), polybutyleneethylene adipate succinate (PBEAS), polybutyleneethylene succinate (PBES), and thermoplastic starch (TPS).

The weight ratio of the core part to the sheath part may be 5:95 to 95:5. For example, the weight ratio of the core part to the sheath part may be 5:95 to 85:15, 7:93 to 80:20, 10:90 to 75:25, or 10:90 to 70:30.

According to still another embodiment of the present invention, the biodegradable nonwoven fabric may be electrostatically treated.

Electrostatic treatment is a method that can enhance the aggregation ability by imparting static electricity to a nonwoven fabric. When the nonwoven fabric is subjected to electrostatic treatment, the fibers constituting the nonwoven fabric forcibly have electric charges therein, whereby the nonwoven fabric made of fibers having polarized charges can easily collect charged microparticles.

The electrostatic treatment process may be carried out using corona discharging, plasma charging, frictional charging, or water charging through high-pressure water droplets, but it is not limited thereto.

In addition, a charging agent may be further used in order to maximize the electrostatic effect, and the charging agent may be a hindered amine-based charging agent, but it is not limited thereto.

According to still another embodiment of the present invention, the biodegradable nonwoven fabric may further comprise a functional coating layer on at least one side thereof.

For example, the functional coating layer may be a hard coating layer or an antibacterial coating layer, and an adhesive layer may be interposed between the functional coating layer and the biodegradable nonwoven fabric.

In addition, at least one side of the biodegradable nonwoven fabric may be surface-treated using ions or electricity. For example, the surface treatment may be carried out by ion coating, ion collecting, electrical coating, or voltage coating, but it is not limited thereto.

In addition, the biodegradable nonwoven fabric may further comprise one or more additives selected from the group consisting of a deodorant, an antibacterial agent, an inorganic filler, and a lubricant.

The deodorant may be, for example, at least one metal oxide selected from the group consisting of titanium dioxide (TiO₂), zinc oxide (ZnO), tin oxide (SnO₂), zirconium dioxide (ZrO), and strontium titanate (SrTiO₃), but it is not limited thereto.

The deodorant may be employed in an amount of 0.01 to 20% by weight based on the total weight of the biodegradable nonwoven fabric. For example, the deodorant may be employed in an amount of 0.01 to 20% by weight, 0.05% by weight to 15% by weight, or 0.1% by weight to 10% by weight, based on the total weight of the biodegradable nonwoven fabric.

The antimicrobial agent may be at least one selected from the group consisting of nano-silver, nano-copper, nano-zinc, and zeolite-based antimicrobial agents, but it is not limited thereto.

The antimicrobial agent may be employed in an amount of 0.01 to 20% by weight based on the total weight of the biodegradable nonwoven fabric. For example, the antimicrobial agent may be employed in an amount of 0.01 to 20% by weight, 0.05% by weight to 15% by weight, or 0.1% by weight to 10% by weight, based on the total weight of the biodegradable nonwoven fabric.

The inorganic filler may comprise at least one selected from the group consisting of talc, barium oxide, calcium carbonate, magnesium carbonate, zinc carbonate, zinc oxide, magnesium oxide, alumina, and silica, but it is not limited thereto.

The inorganic filler may have an average particle diameter of 0.01 µm to 2.0 µm. For example, the average particle diameter of the inorganic filler may be 0.01 µm to 2.0 µm, 0.05 µm to 2.0 µm, or 0.05 µm to 1.5 µm.

The inorganic filler may be employed in an amount of 0.01 to 20% by weight based on the total weight of the biodegradable nonwoven fabric. For example, the inorganic filler may be employed in an amount of 0.01 to 20% by weight, 0.05% by weight to 15% by weight, or 0.1% by weight to 10% by weight, based on the total weight of the biodegradable nonwoven fabric.

The lubricant may be a fatty acid ester, specifically a glycerin fatty acid ester, a sorbitan fatty acid ester, a pyridoxine fatty acid ester, or a mixture of at least one selected therefrom, but it is not limited thereto.

The lubricant may be employed in an amount of 0.01 to 20% by weight based on the total weight of the biodegradable nonwoven fabric. For example, the lubricant may be employed in an amount of 0.01 to 20% by weight, 0.05% by weight to 15% by weight, or 0.1% by weight to 10% by weight, based on the total weight of the biodegradable nonwoven fabric.

### Process for preparing a biodegradable nonwoven fabric

The process for preparing a biodegradable nonwoven fabric according to still another embodiment of the present invention comprises melt-spinning a biodegradable resin composition or pellets prepared by melt-extruding it, wherein the biodegradable resin composition comprises a polyhydroxyalkanoate (PHA) resin comprising a 4-hydroxybutyrate (4-HB) repeat unit and a fluidizing agent and has a melt flow index (MFI) of 5 g/10 minutes or more when measured at 190°C and 2.16 kg according to ASTM D1238.

Details on the biodegradable resin composition are as described above.

Specifically, in the process for preparing a biodegradable nonwoven fabric according to still another embodiment of the present invention, the biodegradable resin composition may be directly fed to a device and melt-spun, or pellets prepared by melt-extrusion of the biodegradable resin composition are fed to a device and melt-spun, to thereby prepare a biodegradable nonwoven fabric.

More specifically, the biodegradable resin composition may be directly fed to a device and melt-spun, or the biodegradable pellets are extruded and melt-spun through a nozzle, cooled, and then wound with a roller to prepare a biodegradable nonwoven fabric. In such an event, the process may be carried out using a spun-bonding melt-spinning apparatus performed using an ejector or may be carried out using a low-speed or highspeed staple fiber spinning machine, but it is not limited thereto.

In addition, the melt-spinning apparatus may comprise a melting section, a nozzle section comprising a filter, a draft section between the nozzle holes and the winding roller, and a winding section. The melting temperature of the melt-spinning apparatus, the diameter of the nozzle holes, the length of the nozzle holes, the ratio of the length to the diameter of the nozzle holes, the size of the nozzle inner filter, the discharged amount through the nozzle, the length of the draft section, the spinning speed, the cooling temperature, the winding speed may be controlled to prepare a biodegradable fiber having desired physical properties.

The biodegradable resin composition or pellets may be melt-spun at a temperature of 150°C to 230°C, 170°C to 210°C, or 190°C to 200°C.

In addition, the spinning speed may be 10 mpm to 5,000 mpm. For example, a spun-bonded nonwoven fabric may be prepared at a spinning speed of 1,000 mpm to 5,000 mpm, 1,200 mpm to 4,500 mpm, or 1,500 mpm to 4,000 mpm. A staple fiber nonwoven fabric may be prepared at a low spinning speed of 10 mpm to 200 mpm, 15 mpm to 180 mpm, or 20 mpm to 160 mpm; or a high spinning speed of 500 mpm to 2,000 mpm, 600 mpm to 1,950 mpm, or 650 mpm to 1,700 mpm.

The spinning step may be carried out such that the basis weight of the biodegradable nonwoven fabric thus prepared is adjusted to 10 gsm to 500 gsm. For example, the spinning step may be carried out such that the basis weight of the biodegradable nonwoven fabric thus prepared is adjusted to 12 gsm to 450 gsm, 15 gsm to 400 gsm, 20 gsm to 350 gsm, 20 gsm to 250 gsm, 25 gsm to 200 gsm, 25 gsm to 150 gsm, 25 gsm to 100 gsm, or 25 gsm to 50 gsm.

In addition, a stretching step may be further carried out after the melt-spinning. Specifically, the stretching may be further carried out when a staple fiber nonwoven fabric is prepared and may be carried out by cold stretching or hot stretching at a stretching ratio of 1.1 times or more. For example, the stretching may be carried out at a stretching ratio of 1.1 times or more, 2.5 times or more, 3.5 times or more, 5 times or more, 5.5 times or more, 6 times or more, 6.5 times or more, or 7 times or more.

As the spinning step is followed by the stretching step, the diameter or length of the fibers in a biodegradable staple fiber nonwoven fabric can be more effectively controlled. Specifically, if the length or diameter of a biodegradable fiber is controlled by the spinning or melt-spinning step alone, the productivity and processability may be deteriorated.

According to still another embodiment of the present invention, it may further comprise melt-extruding the biodegradable resin composition at 150°C to 200°C to prepare pellets.

Specifically, the melt-extrusion may be carried out at a pressure of 6 bar to 30 bar and a temperature of 150°C to 200°C. For example, the melt-extrusion may be carried out at a pressure of 7 bar to 28 bar or 8 bar to 26 bar and a temperature of 155°C to 190°C or 165°C to 185°C using a single-screw extruder or twin-screw extruder.

In addition, a step of mixing with the temperature raised 50°C to 170°C using a single-screw extruder or twin-screw extruder may be further carried out before the melt-extrusion step.

In addition, after the melt-extrusion step, the melt-extrudate may be cooled to 15°C or lower, 10°C or lower, or 6°C or lower, and then cut to prepare biodegradable pellets, but it is not limited thereto.

According to still another embodiment of the present invention, it may further comprise, prior to the melt-spinning step, drying the pellets at 40°C to 60°C for 10 hours or longer.

For example, prior to the melt-spinning step, a step of drying the pellets at 40°C to 58°C or 42°C to 60°C for 11 hours or longer or 12 hours or longer may be further carried out.

In addition, the drying step may be carried out until the resin moisture content of the pellets is 2,000 ppm or less, 1,500 ppm or less, 1,100 ppm or less, 500 ppm or less, 300 ppm or less, 150 ppm or less, 100 ppm or less, 60 ppm or less, or 50 ppm or less, and it may be carried out by hot air drying or dehumidification drying, but it is not limited thereto.

According to still another embodiment of the present invention, the step of spinning a biodegradable resin composition may be carried out using a composite spinning apparatus. For example, the composite spinning apparatus may be a sheath-core composite spinning apparatus.

Specifically, the biodegradable resin composition may be directly fed to the core part or the sheath part of the sheath-core composite spinning apparatus to prepare a biodegradable fiber.

More specifically, the biodegradable resin composition may be fed to the core part or the sheath part, and a biodegradable resin comprising at least one selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), polybutyleneethylene adipate succinate (PBEAS), polybutyleneethylene succinate (PBES), and thermoplastic starch (TPS) may be fed to the core part or the sheath part.

For example, the biodegradable resin composition may be fed to the core part, and a biodegradable resin comprising at least one selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), polybutyleneethylene adipate succinate (PBEAS), polybutyleneethylene succinate (PBES), and thermoplastic starch (TPS) may be fed to the sheath part.

In addition, the weight ratio of the raw materials fed to the core part to the sheath part may be 5:95 to 95:5, 5:95 to 85:15, 7:93 to 80:20, 10:90 to 75:25, or 10:90 to 70:30.

### Mode for the Invention

Hereinafter, the present invention will be described in more detail with reference to the following examples. But the following Examples are intended to illustrate the present invention, and the scope of the Examples is not limited thereto only.

### [Example]

### Preparation of a biodegradable resin composition

### Examples 1 to 9

The components listed in Table 1 were mixed and compounded as shown in Table 2 (temperature: 120°C to 180°C, screw speed: 140 rpm to 300 rpm) to prepare a biodegradable resin composition.

**[Table 1]**

| | | |
|---|---|---|
| A-1 | aPHA | 4-HB content: 33% by weight, weight average molecular weight (Mw): 600,000 g/mole, melt flow index (MFI) at 165°C and 5 kg according to ASTM D1238: 5.5 g/10 minutes |
| A-2 | scPHA | 4-HB content: 6% by weight, weight average molecular weight (Mw): 410,000 g/mole, melt flow index (MFI) at 165°C and 5 kg according to ASTM D1238: 2.88 g/10 minutes |
| B-1 | PLA | Melt flow index (MFI) at 190°C and 2.16 kg according to ASTM D1238: 10 g/10 minutes, melt flow index (MFI) at 210°C and 5 kg according to ASTM D1238: 21 g/10 minutes |
| B-2 | PBS | Melt flow index (MFI) at 190°C and 2.16 kg according to ASTM D1238: 3 g/10 minutes |
| C | Fluidizing agent | Polystyrene-acrylate-based polymer (manufacturer: BASF) |
| D | Compatibilizer | Polyvinyl acetate (manufacturer: Wacker) |

**[Table 2]**

| | A-1 (% by weight) | A-2 (% by weight) | B-1 (% by weight) | B-2 (% by weight) | C (phr) | D (phr) |
|---|---|---|---|---|---|---|
| Ex. 1 | 30 | - | 70 | - | 1 | 1 |
| Ex. 2 | 30 | - | 70 | - | 2 | 1 |
| Ex. 3 | 30 | - | 70 | - | 3 | 1 |
| Ex. 4 | 40 | - | 60 | - | 1 | 1 |
| Ex. 5 | 40 | - | 60 | - | 2 | 1 |
| Ex. 6 | 40 | - | 60 | - | 3 | 1 |
| Ex. 7 | 50 | - | 50 | - | 1 | 1 |
| Ex. 8 | 50 | - | 50 | - | 2 | 1 |
| Ex. 9 | 50 | - | 50 | - | 3 | 1 |
| C. Ex. 1 | 30 | - | 70 | - | - | 1 |
| C. Ex. 2 | 40 | - | 60 | - | - | 1 |
| C. Ex. 3 | 50 | - | 50 | - | - | 1 |

| | | | | | | |
|---|---|---|---|---|---|---|
| * phr (per hundred resin) refers to a unit of input amount of a material added per 100 parts by weight of a polymer (1 phr: 1 g input amount when the polymer is 100 g). | | | | | | |

### [Test Example]

### Test Example 1: Melt flow index

The biodegradable resin compositions prepared in Examples 1 to 9 and Comparative Examples 1 to 3 were each measured for the melt flow index (MFI; g/10 minutes) at 190°C and 2.16 kg according to ASTM D1238.

### Test Example 2: Tg, Tm, Tc, and Tcc

The biodegradable resin compositions prepared in Examples 1 to 9 and Comparative Examples 1 to 3 were each measured for the glass transition temperature (Tg) and melting temperature (Tm) using differential scanning calorimetry (DSC).

Specifically, 5 mg to 20 mg of each of the biodegradable resin compositions was placed in an aluminum pan, and the temperature was raised from 40°C to 180°C at a rate of 10°C/minute using a differential scanning calorimeter, followed by cooling thereof to -50°C at a rate of 10°C/minute to obtain a heat flow curve, from which the glass transition temperature (Tg), melting temperature (Tm), crystallization temperature, (Tc) and cold crystallization temperature (Tcc) were measured.

**[Table 3]**

| | Torque (Nm) | Pressure (kgf/cm²) | MFI (190°C, 2.16 kg) | Tg (°C) | Tm (°C) | Tc (°C) | Tcc (°C) |
|---|---|---|---|---|---|---|---|
| Ex. 1 | 45 | 50 | 8.3 | -23 | 172 | 92 | 93 |
| Ex. 2 | 43 | 45 | 8.9 | -22 | 172 | 91 | 94 |
| Ex. 3 | 40 | 45 | 9.0 | -21 | 171 | - | 96 |
| Ex. 4 | 45 | 52 | 8.1 | -19 | 172 | - | 95 |
| Ex. 5 | 43 | 55 | 8.2 | -20 | 172 | 91 | 94 |
| Ex. 6 | 41 | 50 | 8.6 | -20 | 171 | 90 | 94 |
| Ex. 7 | 46 | 51 | 7.6 | -20 | 172 | - | 96 |
| Ex. 8 | 42 | 48 | 7.8 | -21 | 172 | - | 95 |
| Ex. 9 | 42 | 47 | 8.1 | -21 | 171 | 91 | 93 |
| C. Ex. 1 | 50 | 40 | 7.5 | -21 | 172 | - | 97 |
| C. Ex. 2 | 47 | 50 | 7.5 | -20 | 172 | 90 | 93 |
| C. Ex. 3 | 47 | 53 | 7.5 | -20 | 172 | - | 95 |

As shown in Table 3, the biodegradable resin compositions of Examples 1 to 9 were excellent in dispersibility and had melt flow index (MFI), glass transition temperature (Tg), melting temperature (Tm), crystallization temperature (Tc), and cold crystallization temperatures (Tcc) in desired ranges. In particular, when the biodegradable resin composition was melt-extruded and spun to produce biodegradable fibers, the torque and pressure were lower than those of the prior art, and the viscosity characteristics were excellent; thus, the process temperature can be more readily controlled, leading to excellent processability and productivity. Accordingly, the biodegradable resin compositions of Examples 1 to 9 can be readily used to prepare a biodegradable nonwoven fabric, particularly a biodegradable spun-bonded nonwoven fabric or a biodegradable staple fiber nonwoven fabric, and it is possible to further enhance the quality of the biodegradable nonwoven fabric thus produced.

## Claims

1. A biodegradable resin composition, which comprises a polyhydroxyalkanoate (PHA) resin comprising a 4-hydroxybutyrate (4-HB) repeat unit; and a fluidizing agent, wherein the melt flow index (MFI) measured at 190°C and 2.16 kg according to ASTM D1238 is 5 g/10 minutes or more.

2. The biodegradable resin composition of claim 1, wherein the fluidizing agent comprises at least one selected from the group consisting of polystyrene-based, polyacrylate-based, and polystyrene-acrylate-based polymers.

3. The biodegradable resin composition of claim 1, wherein the fluidizing agent has a specific gravity of 0.7 to 1.8 and a weight average molecular weight of 1,500 g/mole to 8,000 g/mole.

4. The biodegradable resin composition of claim 1, wherein the fluidizing agent has a glass transition temperature (Tg) of 40°C or higher as measured by differential scanning calorimetry (DSC) and a melt flow index of 1,800 g/10 minutes or more when measured at 130°C and 12 kg according to ASTM D1238.

5. The biodegradable resin composition of claim 1, wherein the biodegradable resin composition comprises the fluidizing agent in an amount of 0.1 phr to 20 phr.

6. The biodegradable resin composition of claim 1, wherein the PHA resin comprises the 4-hydroxybutyrate (4-HB) repeat unit in an amount of 0.1% by weight to 60% by weight.

7. The biodegradable resin composition of claim 1, wherein the PHA resin comprises a first PHA resin, and the first PHA resin comprises a 4-hydroxybutyrate (4-HB) repeat unit in an amount of 15% by weight to 60% by weight and has a melt flow index (MFI) of 0.1 g/10 minutes to 20 g/10 minutes when measured at 165°C and 5 kg according to ASTM D1238.

8. The biodegradable resin composition of claim 1, wherein the PHA resin comprises a second PHA resin, and the second PHA resin comprises a 4-hydroxybutyrate (4-HB) repeat unit in an amount of 0.1% by weight to 30% by weight and has a melt flow index of 0.1 g/10 minutes to 15 g/10 minutes when measured at 165°C and 5 kg according to ASTM D1238.

9. The biodegradable resin composition of claim 1, wherein the biodegradable resin composition comprises at least one biodegradable resin selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutyrate-valerate (PHBV), polycaprolactone (PCL), polybutylene succinate adipate terephthalate (PBSAT), and thermoplastic starch (TPS).

10. The biodegradable resin composition of claim 9, wherein the weight ratio of the PHA resin to the biodegradable resin is 1:99 to 99:1.

11. The biodegradable resin composition of claim 10, wherein the weight ratio of the PHA resin to the polylactic acid (PLA) resin is 20:80 to 70:30.

12. The biodegradable resin composition of claim 1, wherein the biodegradable resin composition comprises at least one additive selected from the group consisting of pigments, dye absorbers, light absorbers, antioxidants, compatibilizers, weighting agents, nucleating agents, melt strength agents, and slip agents.

13. The biodegradable resin composition of claim 1, wherein the PHA resin further comprises at least one repeat unit selected from the group consisting of 3-hydroxybutyrate (3-HB), 3-hydroxypropionate (3-HP), 3-hydroxyhexanoate (3-HH), 3-hydroxyvalerate (3-HV), 4-hydroxyvalerate (4-HV), 5-hydroxyvalerate (5-HV), and 6-hydroxyhexanoate (6-HH).

14. The biodegradable resin composition of claim 1, wherein the biodegradable resin composition has a glass transition temperature (Tg) of -35°C to 15°C, a melting temperature (Tm) of 105°C to 200°C, a crystallization temperature (Tc), which is not measured or 50°C to 120°C, and a cold crystallization temperature (Tcc) of 30°C to 125°C, as measured by a differential scanning calorimeter (DSC).

15. A biodegradable nonwoven fabric, which comprises biodegradable fibers, wherein the biodegradable fibers comprise a polyhydroxyalkanoate (PHA) resin comprising a 4-hydroxybutyrate (4-HB) repeat unit; and a fluidizing agent.

16. The biodegradable nonwoven fabric of claim 15, wherein the biodegradable fibers have an average length of 100 mm or less and an average diameter of 1 µm to 100 µm.

17. The biodegradable nonwoven fabric of claim 15, which is prepared by a spun-bonding process.

18. The biodegradable nonwoven fabric of claim 15, which is prepared from a biodegradable resin composition, wherein the biodegradable resin composition has a melt flow index (MFI) of 5 g/10 minutes or more when measured at 190°C and 2.16 kg according to ASTM D1238.

19. The biodegradable nonwoven fabric of claim 15, wherein the biodegradable fiber is a composite fiber of a heterogeneous cross-section or a composite fiber of two or more or three or more components.

20. The biodegradable nonwoven fabric of claim 15, wherein the biodegradable fiber is a sheath-core type comprising a core part and a sheath part, a side-by-side type, a sea-islands type, or a segmented-pie type.

21. A process for preparing a biodegradable nonwoven fabric, which comprises:
melt-spinning a biodegradable resin composition or pellets prepared by melt-extruding the biodegradable resin composition,
wherein the biodegradable resin composition comprises a polyhydroxyalkanoate (PHA) resin comprising a 4-hydroxybutyrate (4-HB) repeat unit and a fluidizing agent and has a melt flow index (MFI) of 5 g/10 minutes or more when measured at 190°C and 2.16 kg according to ASTM D1238.

22. The process for preparing a biodegradable nonwoven fabric of claim 21, wherein the step of spinning a biodegradable resin composition is carried out using a sheath-core composite spinning apparatus.

23. The process for preparing a biodegradable nonwoven fabric of claim 22, wherein the sheath-core composite spinning apparatus comprises a core part and a sheath part, and the weight ratio of raw materials to be fed to the core part and the sheath part is 5:95 to 95:5.

24. The process for preparing a biodegradable nonwoven fabric of claim 23, wherein the biodegradable resin composition is fed to the core part.
